# EUROPÄISCHE PATENTSCHRIFT

(11) **EP 3 000 312 B1**
(45) Veröffentlichungstag und Bekanntmachung des Hinweises auf die Patenterteilung: **17.04.2019**
(21) Anmeldenummer: 15182103.0
(22) Anmeldetag: 24.08.2015
(51) Int. Cl.: A01F 29/09, A01D 41/127

(54) **LANDWIRTSCHAFTLICHE ERNTEMASCHINE MIT EINEM AUSTAUSCHBAREN ERNTEGUTBEARBEITUNGSELEMENT**
AGRICULTURAL HARVESTING MACHINE WITH AN INTERCHANGEABLE CROP PROCESSING ELEMENT
MOISSONNEUSE DOTEE D'UN ELEMENT DE TRAITEMENT DE RECOLTE REMPLAÇABLE

(30) Priorität: 26.09.2014 DE 102014219586
(43) Veröffentlichungstag der Anmeldung: 30.03.2016
(73) Patentinhaber: Deere & Company, Moline, IL 61265 (US)
(72) Erfinder: Bischoff, Lutz, 66989 Nuenschweiler (DE)
(74) Vertreter: Holst, Sönke

(56) Entgegenhaltungen:
- EP-A1- 1 564 688
- DE-A1- 19 804 740
- DE-A1-102007 034 167
- DE-A1-102009 046 821
- US-A1- 2014 250 854

## Beschreibung

### Stand der Technik

Landwirtschaftliche Erntemaschinen, wie Feldhäcksler und insbesondere Mähdrescher, sind heutzutage relativ komplexe Maschinen mit einer Vielzahl von Betriebsparametern, die auf geeignete Werte einzustellen sind, um ein annähernd optimales Betriebsergebnis beim Erntevorgang zu erzielen. Es sind im Stand der Technik Systeme bekannt, die mit Sensoren zur Erfassung von Ernteguteigenschaften und/oder Ergebnissen von in der Erntemaschine ablaufenden Prozessen verbunden sind und überwachen, ob die Maschine ordnungsgemäß arbeitet und/oder selbsttätig optimierte Betriebsparameter festlegen und durch Ansteuerung von Aktoren selbsttätig einstellen oder dem Bediener anzeigen, der sie dann einstellen kann.

Derartige Systeme benötigen jedoch auch Daten hinsichtlich der Konfiguration der jeweiligen Erntemaschine, denn ohne beispielsweise zu wissen, wie viele Häckselmesser um den Umfang einer Häckseltrommel eines Feldhäckslers verteilt sind, ist eine selbsttätige Vorgabe einer Vorpresswalzendrehzahl zum Erreichen einer gewünschten Schnittlänge nicht möglich. Analog ist zur selbsttätigen Einstellung von Betriebsparametern einer Reinigungseinrichtung eines Mähdreschers erforderlich, dass dem Kontrollsystem Daten hinsichtlich der Art und Größe der Reinigungseinrichtung vorliegen.

In vielen Fällen kontaktiert ein Bediener telefonisch einen Unterstützungsservice, um sich bei der Behebung von Problemen beim Erntevorgang beraten zu lassen. Auch hier sind Informationen hinsichtlich der Konfiguration der Erntemaschine erforderlich, um fundierte Aussagen treffen zu können, liegen jedoch oft weder dem Bediener noch dem Unterstützungsservice vor.

Im Stand der Technik sind Lösungen beschrieben worden, bei denen die Konfiguration von Elementen der Erntemaschine durch Sensoren erfasst wird, die mit den Elementen zusammenwirken und beispielsweise die Anzahl der Häckselmesser einer Häckseltrommel eines Feldhäckslers anhand der beim Drehen entstehenden Vibrationen feststellen (DE 10 2009 046 821 A1).

Weiterhin wurde vorgeschlagen, die Kontrolleinheit mit einer Datenbank auszustatten, in welche Daten hinsichtlich der Konfiguration der Erntemaschine werksseitig bei der Herstellung eingetragen werden. Im Falle eines Umbaus der Erntemaschine sind die Daten durch das Werkstattpersonal in nicht näher beschriebener Weise zu aktualisieren (EP 1 564 688 A1).

Außerdem beschreibt die DE 199 49 994 A1 eine aktive, mit einer eigenen Stromversorgung ausgestattete Messwerterfassungseinrichtung, die zusätzlich mit einer Speichereinrichtung für Identifikationsdaten und einem Transponder ausgestattet ist. Die Identifikationsdaten können ein Bauteil, eine Bauteilgruppe oder Gerät identifizieren, an dem die Messwerterfassungseinrichtung angebracht ist. Die Identifikationsdaten werden durch ein Lesegerät eines Trägerfahrzeugs (bei dem es sich beispielsweise um einen Traktor oder einen Häcksler handeln kann) erfasst und an dessen Steuerelektronik übersandt, an dem die Baugruppe mit der Messwerterfassungseinrichtung angebracht wird, damit die für die Adaptierung notwendigen Verrichtungen selbsttätig durch die Steuerelektronik des Trägerfahrzeugs ausgelöst werden.

Eine Identifikation eines Anbaugeräts eines Traktors mittels eines am Anbaugerät befestigten RFID-Chips und eines Lesegeräts des Traktors wird in der DE 10 2007 034 167 A1 beschrieben.

In der Präsentation "Mobile Servicewelten im internationalen Service des Maschinen- und Anlagenbaus" von M. Görtz, aufgefunden im Internet am 24.9.2014, wird zwar eine Identifizierung von Komponenten stationärer Maschinen durch RFID-Etiketten beschrieben, jedoch auch erwähnt, dass derartige Etiketten unter Umständen u.a. aufgrund von Abdeckungen nicht von außen auslesbar sind.

### Aufgabe

Während eine Feststellung der Konfiguration eines bestimmten Bauteils nach DE 10 2009 046 821 A1 durch einen zugeordneten Sensor in manchen Fällen durchaus sinnvoll erscheint, wäre es doch sehr aufwändig, für alle austauschbaren Bauteile einer Erntemaschine jeweils zugeordnete Sensoren bereitzustellen. Bei einer manuellen Aktualisierung einer Datenbank der Erntemaschine gemäß EP 1 564 688 A1 besteht die Gefahr, dass notwendige Eingaben versehentlich nicht oder nicht korrekt gemacht werden. Die mit einer separaten Stromversorgung der Identifikationseinrichtung versehene Anordnung nach DE 199 49 994 A1 und jene nach DE 10 2007 034 167 A1 sind für Anbaugeräte, d.h. im Falle von Erntemaschinen zugehörige Erntevorsätze, vorgesehen und nicht für im Inneren der Erntemaschine eingebaute Erntegutbearbeitungselemente. Dieses Problem gilt auch für die stationären Maschinen gemäß der Präsentation von M. Görtz.

Die vorliegende Erfindung hat sich zur Aufgabe gesetzt, eine landwirtschaftliche Erntemaschine bereitzustellen, welche die erwähnten Nachteile nicht oder in vermindertem Ausmaße aufweist.

### Erfindung

Die vorliegende Erfindung wird durch die Ansprüche definiert.

Eine landwirtschaftliche Erntemaschine umfasst zumindest ein im Inneren der Erntemaschine montiertes, austauschbares und in unterschiedlichen Varianten verfügbares Erntegutbearbeitungselement und eine elektronische Steuereinheit, die mit einer Datenbank verbunden ist, in der das im Inneren der Erntemaschine eingebaute Erntegutbearbeitungselement betreffende Daten abgelegt sind. Die Steuereinheit ist eingerichtet, auf den Daten basierende Ausgangssignale zu erzeugen. Eine mit der Steuereinheit verbundene Leseeinrichtung ist eingerichtet, mit einem am Erntegutbearbeitungselement angebrachten Identifikationselement zusammenzuwirken und der Steuereinrichtung bei oder nach einem Einbau eines Erntegutbearbeitungselements in die Erntemaschine ein das Erntegutbearbeitungselement eindeutig identifizierendes Ausgabesignal zu übermitteln, anhand dessen die Steuereinheit die Datenbank aktualisiert.

Auf diese Weise wird das Erntegutbearbeitungselement selbsttätig anhand eines passiven (d.h. nicht mit einer eigenen Stromquelle ausgestatteten) oder aktiven (mit einer Stromquelle versehenen, z.B. einer Batterie oder eines Akkus oder mit so genannten Energieerntemitteln, die Bewegungen oder Schwingungen oder Licht oder andere elektromagnetische Wellen in elektrische Energie umsetzen, vgl. http://www.itsoc.org/conferences/past-schools/na-school-2009/poster-repository/Ago-13-Fabiolannello-POSTER.pdf oder http://www.st.com/web/en/press/en/p3356) Identifikationselements erkannt, das beim Einbau in die Erntemaschine oder daran anschließend durch eine Leseeinrichtung ausgelesen wird. Anhand der (das Identifikationselement und somit das Erntegutbearbeitungselement anhand seiner Artikelnummer eindeutig identifizierenden) Ausgabesignale der Leseeinrichtung aktualisiert die Steuereinrichtung die Datenbank und kann im Folgenden aktuelle Daten daraus entnehmen, bei denen nunmehr sichergestellt ist, dass sie das jeweils eingebaute Erntegutbearbeitungselement betreffen. Diese Daten können insbesondere mechanische Eigenschaften des Erntegutbearbeitungselements betreffen. Die Steuereinrichtung ist betreibbar, die das Erntegutbearbeitungselement betreffenden Daten über eine drahtlose Kommunikationsschnittstelle von einer anderen, beabstandeten Datenbank abzufordern und in der Datenbank abzuspeichern, falls eine bestimmte Artikelnummer nicht in der Datenbank vorhanden ist.

Insbesondere ist die Steuereinheit eingerichtet, den Betriebszustand der Erntemaschine zu überwachen und/oder sie dient zur selbsttätigen Einstellung eines Betriebsparameters der Erntemaschine. Hierzu ist sie mit einem Sensor zur Erfassung eines Betriebswerts der Erntemaschine und/oder einem Sensor zur Erfassung einer Ernteguteigenschaft und/oder einem Sensor zur Erfassung eines Ergebnisses eines in der Erntemaschine ablaufenden Erntegutbearbeitungsprozesses verbunden und betreibbar, basierend auf den Daten und den Signalen des Sensors Überwachungssignale hinsichtlich des Betriebszustands der Erntemaschine und/oder Steuersignale zur Einstellung eines Betriebsparameters der Erntemaschine zu erzeugen.

Durch die mittels der Leseeinrichtung aktualisierte Datenbank besteht die Möglichkeit, Voreinstellungen von Betriebsparametern an das jeweilige Erntegutbearbeitungselement anzupassen, oder unterschiedliche Zusammenhänge (Übersetzungen) zwischen Aktorpositionen und zugehörigen Einstellungen (z.B. Öffnungen) der Erntegutbearbeitungselemente zu verwenden. Auch ist eine (Fern-) Diagnose bei Problemen oder Störungen wesentlich leichter durchführbar, wenn genau bekannt ist, welche Erntegutbearbeitungselemente in der Erntemaschine verwendet werden, was auch für die (Fern-) Überwachung von Bedienereinstellungen und zugehörigen Ernteergebnissen gilt. Hierzu besteht auch die Möglichkeit, lediglich die von der Leseeinrichtung bereitgestellten Informationen zur aktuellen Konfiguration der Erntemaschine (d.h. die aus den Ausgabesignalen der Leseeinrichtung abgeleiteten Informationen hinsichtlich der eingebauten Erntegutbearbeitungselemente, wie Teilenummern) drahtlos an eine beabstandete Stelle (z.B. einen Teleservice) zu übersenden, damit der dort befindliche Techniker dem Bediener der Erntemaschine fernmündlich bei der Behebung eventueller Probleme besser, da auf der konkreten Konfiguration der Erntemaschine basierend, beraten kann. Auch können auf diese Weise Ersatzteile leichter bereitgestellt werden.

Das Identifikationselement kann ein Etikett mit einer optisch identifizierbaren Kennzeichnung sein, wie ein Strichcode oder QR-Code. Die Leseeinrichtung arbeitet bei dieser Ausführungsform optisch, beispielsweise mit einer Kamera oder einem Laserscanner. Die Leseeinrichtung ist insbesondere handhaltbar und als klassischer Scanner, wie er an Ladenkassen verwendet wird, oder als Smartphone mit einer Kamera ausgeführt, das drahtlos mit der Steuerung zusammenarbeitet.

Alternativ oder zusätzlich kann das Erntegutbearbeitungselement als Identifikationselement mit einem elektromagnetisch auslesbaren Datenträger, wie einem RFID-Chip, versehen sein. Bei dieser Ausführungsform arbeitet die Leseeinrichtung elektromagnetisch, beispielsweise über Nahfeldkommunikation.

Die Leseeinrichtung kann im Bereich einer Öffnung einer Außenhülle der Erntemaschine angeordnet sein, durch welche hindurch das Erntegutbearbeitungselement aus der Erntemaschine ausbau- und einbaubar ist. Es besteht auch die Möglichkeit, dass die Leseeinrichtung innerhalb einer Außenhülle der Erntemaschine angeordnet ist und/oder dass die Leseeinrichtung eingerichtet ist, zu erkennen, wenn ein Erntegutbearbeitungselement zur Erntemaschine gebracht oder davon entfernt wird.

Die identifizierbare Eigenschaft des Erntegutbearbeitungselements kann die Art eines Dreschkorbs, Separierkorbs, Reinigungssiebs, Strohhäckslers oder Strohverteilers für einen Mähdrescher sein. Das Erntegutbearbeitungselement kann entweder direkt mit dem Erntegut zusammenwirken, wie die erwähnten Erntegutbearbeitungselemente, es kann jedoch auch ein Element sein, das den Antrieb und/oder eine Verstellung eines mit dem Erntegut zusammenwirkenden Erntegutbearbeitungselements bewerkstelligt und so indirekt mit dem Erntegut zusammenwirkt.

### Ausführungsbeispiel

In den Zeichnungen sind drei nachfolgend näher beschriebene Ausführungsbeispiele der Erfindung dargestellt. Es zeigt:
- Fig. 1: eine schematische seitliche Ansicht einer Erntemaschine, die eine Steuereinheit und mehrere Erntegutbearbeitungselemente aufweist,
- Fig. 2: ein Schema der Steuereinheit und der damit verbundenen Sensoren der Erntemaschine,
- Fig. 3: eine schematische Ansicht einer Anwendung einer Leseeinrichtung nach einer ersten Ausführungsform beim Ablesen eines Identifikationselements eines Erntegutbearbeitungselements der Erntemaschine,
- Fig. 4: eine schematische Ansicht einer zweiten Ausführungsform einer Leseeinrichtung in der Erntemaschine, und
- Fig. 5: eine schematische Ansicht einer dritten Ausführungsform einer Leseeinrichtung in der Erntemaschine.

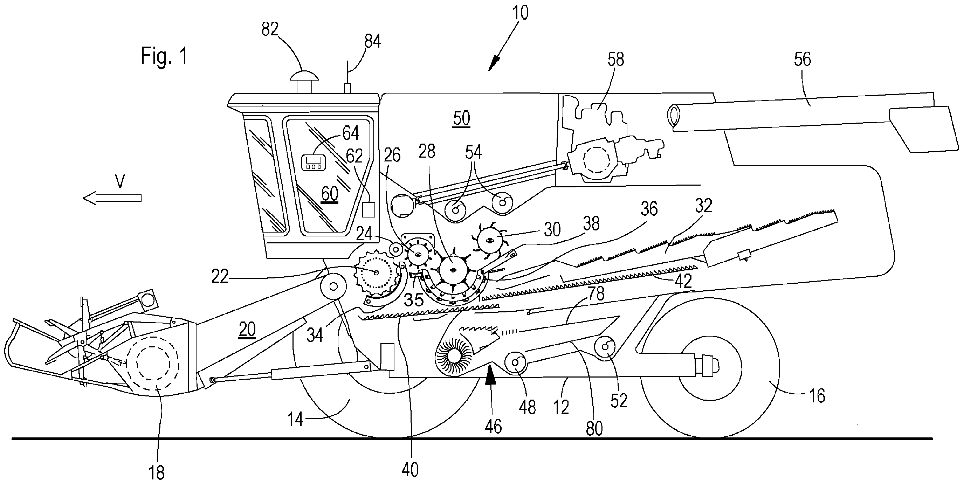

Die Figur 1 zeigt eine selbstfahrende Erntemaschine 10 in Form eines Mähdreschers mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um die Erntemaschine 10 z. B. über ein abzuerntendes Feld zu bewegen. Im Folgenden beziehen sich Richtungsangaben, wie vorn und hinten, auf die Fahrtrichtung V der Erntemaschine 10 im Erntebetrieb.

An den vorderen Endbereich der Erntemaschine 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 44 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet.

Das durch den Dreschkorb 34, den Separierkorb 36 und die Strohschüttler 32 hindurchtretende, Körner und Verunreinigungen enthaltende Gemisch gelangt über Förderböden 40, 42 in eine Reinigungseinrichtung 46 mit einem Obersieb 78 und einem Untersieb 80. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist. Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren ersetzt werden.

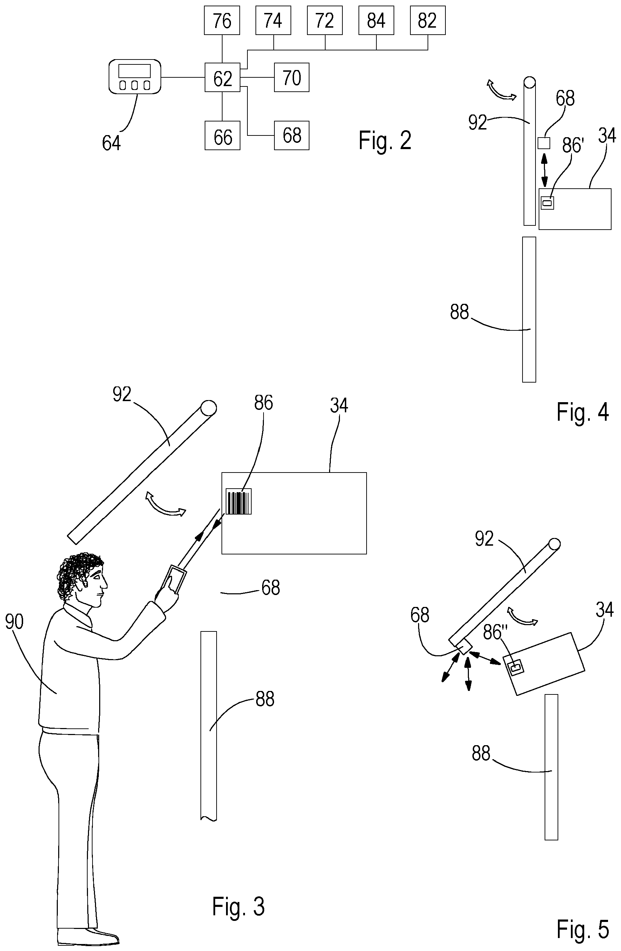

Die Erntemaschine 10 ist mit einer elektronischen Steuereinheit 62 ausgestattet, die in der Figur 2 schematisch dargestellt ist. Die Steuereinheit 62 umfasst in an sich bekannter Weise einen Prozessor und Speichereinheiten und ist mit einer Bedienerschnittstelle 64 verbunden, die eine Anzeigeeinrichtung und Eingabemittel aufweist.

Weiterhin ist die Steuereinheit 62 mit einer Datenbank 66, in der Daten hinsichtlich einer oder mehrerer Eigenschaften von einem oder mehreren in die Erntemaschine 10 eingebauten Erntegutbearbeitungselementen abgelegt sind, verbunden. Diese Daten können beispielsweise eines oder mehrere folgender - austauschbarer, in unterschiedlichen Varianten verfügbarer - Erntegutbearbeitungselemente betreffen: die Dreschtrommel 22, den Dreschkorb 34, den Separierkorb 36, das Obersieb 78 und/oder das Untersieb 80. Die Daten entsprechen bestimmten Parametern der Erntegutbearbeitungselemente, wie Öffnungsgrößen oder anderen Abmessungen, oder dienen lediglich zur Identifikation des Erntegutbearbeitungselements für Fernberatungszwecke des Bedieners und werden bei Bedarf über eine Kommunikationsschnittstelle 84 an eine beabstandete Stelle gesandt. Die von der Steuereinheit 62 benötigten Daten kann die Steuereinrichtung 62 anhand einer von einer Leseeinrichtung 68 bereitgestellten, eindeutigen Artikelnummer oder anderen Identifizierungsmerkmals des Erntegutbearbeitungselements aus der Datenbank 66 auslesen, oder (insbesondere falls eine bestimmte Artikelnummer nicht in der Datenbank 66 vorhanden ist) über die drahtlose Kommunikationsschnittstelle 84 von einer anderen, beabstandeten Datenbank (nicht gezeigt), die beispielsweise beim Hersteller der Erntemaschine 10 vorgehalten und aktualisiert wird, abfordern und in der Datenbank 66 abspeichern.

Die Steuereinheit 62 ist zudem mit der Leseeinrichtung 68 verbunden, die weiter unten näher erläutert wird. Die Steuereinheit 62 ist außerdem mit einem oder mehreren Aktoren 70 verbunden, die u.a. Betriebsparameter der Erntemaschine 10, wie Drehzahl der Dreschtrommel 22, die Dreschspaltgröße zwischen Dreschtrommel 22 und Dreschkorb 34, die Drehzahl des Gebläses der Reinigungseinrichtung 46 und/oder die Öffnungsweiten des Ober- und/oder Untersiebs 78, 80 verstellen können. Auch ist die Steuereinheit 62 mit einem Sensor 72 zur Erfassung eines Betriebswerts der Erntemaschine 10, z.B. der Dreschtrommeldrehzahl oder der Position eines Aktors 70 zur Verstellung der Öffnungsweite des Ober- und/oder Untersiebs 78, 80, einem Sensor 74 zur Erfassung einer Ernteguteigenschaft, z.B. der Erntegutfeuchte, und einem Sensor 76 zur Erfassung eines Ergebnisses eines in der Erntemaschine ablaufenden Erntegutbearbeitungsprozesses, z.B. der Verluste des Strohschüttlers 32 oder der Reinigungseinrichtung 46, sowie einem Positionsbestimmungssystem 82 verbunden.

Die Steuereinheit 62 dient dazu, als Kontrollsystem beim Betrieb der Erntemaschine 10 den Betriebszustand der Erntemaschine 10 zu überwachen und/oder einen oder mehrere Betriebsparameter der Erntemaschine 10 über die Bedienerschnittstelle 64 dem Bediener vorzuschlagen, der sie dann selbst einstellen kann, oder über die Aktoren 70 selbsttätig einzustellen. Die Überwachung des Betriebszustands der Erntemaschine 10 kann einerseits bedeuten, die einzelnen Bauteile der Erntemaschine auf mögliche Schäden zu überwachen (vgl. EP 1 564 688 A1) und ggf. ein Fehlersignal als Überwachungssignal abzugeben, andererseits kann erfasst werden, ob der Erntebetrieb optimal abläuft oder vom Bediener bewerkstelligte Einstellungen verbesserungswürdig sind und entsprechende Daten als Überwachungssignal über die Kommunikationsschnittstelle 84 auf der Anzeigeeinrichtung der Bedienerschnittstelle 64 angezeigt und/oder an eine beabstandete Stelle gesandt werden (vgl. beispielsweise DE 102 04 076 A1). Das Bereitstellen von Steuersignalen zur Einstellung eines Betriebsparameters der Erntemaschine 10 zwecks Vorschlagens (auf der Anzeigeeinrichtung der Bedienerschnittstelle 64) oder selbsttätigen Einstellens der Betriebsparameter (durch die Aktoren 70) beruht in an sich bekannter Weise auf den Signalen der Sensoren 72, 74 und 76, wobei beispielsweise Parameter für die Aktoren 70 anhand von Ernteguteigenschaften (die durch den Sensor 74 ermittelt werden können) aus Erfahrungswerten abgeleitet werden und die Signale der Sensoren 76 und 72 als Rückkopplungswerte dienen und zusätzliche Bedienereingaben, wie beispielsweise zur Zufriedenheit des Bedieners mit bestimmten Ergebnissen des Erntebetriebs, ergänzend herangezogen werden können. Hierzu sei beispielsweise auf die Offenbarungen der US 2014/0277960 A1 und der dort zitierten Dokumente verwiesen, die durch Verweis mit in die vorliegenden Unterlagen aufgenommen werden.

Für diese Aufgabe(n) benötigt die Steuereinheit 62 die Daten aus der Datenbank 66, denn die für einen optimalen Erntebetrieb einzustellenden Betriebsparameter hängen auch davon ab, welcher Art die Erntegutbearbeitungselemente sind und wie deren Abmessungen sind. Eine Dreschtrommel 22 für Reis ist mit anderer Drehzahl und anderem Dreschspalt zu betreiben als eine Dreschtrommel 22 für Getreide, die wiederum mit anderer Drehzahl und anderem Dreschspalt zu betreiben ist als eine Dreschtrommel 22 für Mais. Diese Anmerkungen gelten analog für den Dreschkorb 34, den Separierkorb 36 sowie die Siebe 78, 80, die jeweils in unterschiedlichen Ausführungsformen verfügbar sind. Die vorliegende Erfindung schlägt verschiedene Vorgehensweisen vor, um das Problem zu lösen, auf einfache und möglichst wenig fehlerträchtige Weise in der Datenbank 66 jeweils den aktuell in der Erntemaschine 10 vorhandenen Erntegutbearbeitungselementen entsprechende Daten vorzuhalten und an die Steuereinheit 62 übergeben zu können. Dazu ist die Leseeinrichtung 68 vorgesehen, das an den Erntegutbearbeitungselementen angebrachte, passive (oder mit einer Stromquelle versehene) Identifikationselemente 86, 86', 86" liest und Signale an die Steuereinheit 62 kommuniziert, anhand welcher die Steuereinheit 62 das jeweilige Erntegutbearbeitungselement identifizieren kann. Hierbei kann durch die Leseeinrichtung beispielsweise eine im Identifikationselement 86, 86', 86" kodierte Artikelnummer identifiziert und an die Steuereinrichtung 62 übersandt werden. Die Steuereinheit 62 liest dann die Daten aus der Datenbank 66 aus, die dem identifizierten Erntegutbearbeitungselement entsprechen. Diese Daten können Abmessungen oder andere mechanische Eigenschaften der Erntegutbearbeitungselemente betreffen oder bei bestimmten Konstellationen einzustellende Betriebsparameter oder davon abhängige Größen oder Größen, anhand denen die Betriebsparameter berechnet werden können.

Eine erste Ausführungsform einer Leseeinrichtung 68 und eines Identifikationselement 86 ist in der Figur 3 gezeigt. Das Identifikationselement 86 ist ein seitlich am Erntegutbearbeitungselement, bei dem es sich hier um den Dreschkorb 34 handelt, aufgeklebtes Etikett mit einem das Erntegutbearbeitungselement eindeutig identifizierenden Strich- oder QR-Code, das mit einer als Smartphone mit einer Kamera ausgeführten Leseeinrichtung 68 ausgelesen wird, auf dem ein entsprechendes Anwendungsprogramm (app) läuft. Die Leseeinrichtung 68 kommuniziert dann drahtlos über ein beliebiges Protokoll (z.B. WLAN oder ein Telefonprotokoll) mit der Steuerung 62, um eine identifizierte Artikelnummer des Dreschkorbs 34 zu übersenden. Der Zugang zum Erntegutbearbeitungselement erfolgt hier durch eine aufschwenkbare Klappe 92 der Außenhülle 88 der Erntemaschine 10, durch welche ein Bediener 90 Zugang zum Identifikationselement 86 erhält. Der in der Figur 3 gezeigte Lesevorgang wird insbesondere dann ausgeführt, wenn ein Erntegutbearbeitungselement ausgetauscht wurde, sei es durch einen Typ für ein anderes Erntegut oder eine neuere Version des Erntegutbearbeitungselements. Der Bediener 90 kann nach jedem Schließen der Klappe 92 an diesen Lesevorgang erinnert werden, insbesondere durch die Anzeigeeinrichtung der Bedienerschnittstelle 64. Anstelle oder zusätzlich zu einer optischen Erkennung wäre es auch denkbar, dass die Kommunikation zwischen der Leseeinrichtung 68 und dem Identifikationselement 86 elektromagnetisch erfolgt, insbesondere über Nahfeldkommunikation, wobei das Identifikationselement dann (auch) einen RFID-Chip identifiziert wird.

Das als Leseeinrichtung 68 verwendete Smartphone kann auch verwendet werden, um direkt auf der Anzeigeeinrichtung des Smartphones Informationen zum Erntegutbearbeitungselement anzuzeigen, die anhand des Identifikationselements 86 aus dem Speicher des Smartphones (oder über eine drahtlose Leitung von einer beabstandeten Stelle, insbesondere vom Hersteller des Erntegutbearbeitungselements) abgerufen werden, z.B. die Teilenummer, Bündelnummer, eine Beschreibung und vorgesehene Einsatzgebiete, Vorteile des Erntegutbearbeitungselements und/oder eine Liste kompatibler Optionen. Auch kann eine Suchmöglichkeit nach anderen kompatiblen Optionen entsprechend der jeweiligen Anforderungen gegeben werden oder eine Möglichkeit, das Erntegutbearbeitungselement online zu bestellen oder sich eine Einbauanweisung zeigen zu lassen.

Bei der zweiten Ausführungsform nach Figur 4 ist das Identifikationselement 86' als RFID-Chip ausgeführt und die Leseeinrichtung 68 an der Innenseite der Außenhülle 88 (hier an der Klappe 92) befestigt. Die Leseeinrichtung 68 kommuniziert über ein Kabel, z.B. den Maschinenbus, oder drahtlos mit der Steuereinheit 62. Bei dieser Ausführungsform kann die Leseeinrichtung 68 über Nahfeldkommunikation mit dem Identifikationselement 86' und weiteren in der Nähe angebrachten Identifikationselementen (nicht gezeigt), die z.B. am Separierkorb 36 und/oder an der Dreschtrommel 22 angebracht sind, zusammenwirken, oder letzteren sind eigene Leseeinrichtungen (nicht gezeigt) zugeordnet. Eine weitere Leseeinrichtung (nicht gezeigt) könnte dann in der Nähe der Reinigungseinrichtung 46 angebracht werden, um Identifikationselemente des Obersiebs 78 und des Untersiebs 80 zu erfassen. Im RFID-Chip des Identifikationselements 86' ist eine eindeutige Kennung, z.B. Artikelnummer des Erntegutbearbeitungselements abgespeichert, die durch die Leseeinrichtung 68 erfasst wird. Hier erfolgt eine Ablesung des Identifikationselements 86' jedes Mal, nachdem die Klappe 92 geschlossen wurde. Ein Vorteil gegenüber der ersten Ausführungsform liegt darin, dass der Bediener nicht tätig werden muss.

Auch bei der dritten Ausführungsform nach Figur 5 ist das Identifikationselement 86" als RFID-Chip ausgeführt und die Leseeinrichtung 68 an der Innenseite der Außenhülle 88 (hier an der Klappe 92) befestigt. Die Leseeinrichtung 68 kommuniziert über ein Kabel, z.B. den Maschinenbus, oder drahtlos mit der Steuereinheit 62. Die Leseeinrichtung 68 ist vorzugsweise in einer möglichst nach unten und nur in begrenztem Maße zur Erntemaschine 10 hin ausgerichteten Zone sensitiv, um durch Reflexionen an Metallteilen der Erntemaschine 10 bedingte Störungen zu vermindern oder zu vermeiden.

Die Leseeinrichtung 68 ist in dieser Ausführungsform eingerichtet zu erkennen, ob das Erntegutbearbeitungselement (im Beispiel gerade der Dreschkorb 34) von der Erntemaschine 10 abgebaut oder eingebaut wird, wozu insbesondere die sich zeitlich ändernden Signalstärken des Identifikationselements 86" genutzt werden. Im RFID-Chip des Identifikationselements 86" ist eine eindeutige Kennung, z.B. Artikelnummer des Erntegutbearbeitungselements abgespeichert, die durch die Leseeinrichtung 68 erfasst wird. Die Leseeinrichtung 68 ermöglicht es der Steuereinrichtung 62 somit, ständig eine aktuelle Inventarliste der Erntegutbearbeitungseinrichtungen der Erntemaschine zu führen. Eine weitere Leseeinrichtung (nicht gezeigt) könnte in der Nähe einer Klappe der Reinigungseinrichtung 46 angebracht werden, um beim Aus- und Einbau die Identifikationselemente des Obersiebs 78 und des Untersiebs 80 zu erfassen. Bei dieser Ausführungsform wird somit die Umgebung der Erntemaschine 10 auf ein- und austretende Identifikationselemente 86" überwacht, um die Erntegutbearbeitungseinrichtungen betreffende Inventarliste der Steuereinheit 62 der Erntemaschine 10 aktuell zu halten. Die Leseeinrichtung 68 ist hier vorzugsweise nur aktiv, wenn die Klappe 92 geöffnet ist und/oder sich eine mittels eines Bewegungssensors (nicht gezeigt) erkannte Person in seinem sensitiven Bereich befindet.

Es sei noch angemerkt, dass die erste Ausführungsform mit der zweiten oder dritten Ausführungsform kombiniert werden könnte, um die Fehlermöglichkeiten zu vermindern. Dabei wären die Erntegutbearbeitungselemente mit zwei Identifikationselementen 86 und 86' oder 86" zu versehen. Die Leseeinrichtung 68 der Figur 3 kann dann beide Identifikationselemente 86 und 86' oder 86" auslesen, zusätzlich zur Leseeinrichtung der Figuren 4 oder 5, das nur die Identifikationselemente 86' oder 86" ausliest.

## Patentansprüche

1. Landwirtschaftliche Erntemaschine (10), umfassend:
zumindest ein im Inneren der Erntemaschine (10) montiertes, austauschbares und in unterschiedlichen Varianten verfügbares Erntegutbearbeitungselement, und
eine elektronische Steuereinheit (62), die mit einer Datenbank (66) verbunden ist, in der das im Inneren der Erntemaschine (10) eingebaute Erntegutbearbeitungselement betreffende Daten abgelegt sind, wobei die Steuereinheit (62) eingerichtet ist, auf den das Erntegutbearbeitungselement betreffenden Daten basierende Ausgangssignale zu erzeugen,
**gekennzeichnet durch** eine mit der Steuereinheit (62) verbundene Leseeinrichtung (68), die eingerichtet ist, mit einem am Erntegutbearbeitungselement angebrachten Identifikationselement (86, 86', 86") zusammenzuwirken und der Steuereinrichtung (62) bei oder nach einem Einbau eines Erntegutbearbeitungselements in die Erntemaschine (10) ein das Erntegutbearbeitungselement eindeutig identifizierendes, eine eindeutige Artikelnummer des Erntegutbearbeitungselements repräsentierendes Ausgabesignal zu übermitteln, anhand dessen die Steuereinheit (62) die Datenbank (66) aktualisiert und im Folgenden betreibbar ist, das jeweils eingebaute Erntegutbearbeitungselement betreffende Daten aus der Datenbank (66) zu entnehmen,
wobei die Steuereinrichtung (62) betreibbar ist, die das Erntegutbearbeitungselement betreffenden Daten über eine drahtlose Kommunikationsschnittstelle (84) von einer anderen, beabstandeten Datenbank abzufordern und in der Datenbank (66) abzuspeichern, falls eine bestimmte Artikelnummer nicht in der Datenbank (66) vorhanden ist.

2. Erntemaschine (10) nach Anspruch 1, wobei die Steuereinheit (62) eingerichtet ist, den Betriebszustand der Erntemaschine (10) zu überwachen und/oder zur selbsttätigen Einstellung eines Betriebsparameters der Erntemaschine (10) dient und mit einem Sensor (72) zur Erfassung eines Betriebswerts der Erntemaschine (10) und/oder einem Sensor (74) zur Erfassung einer Ernteguteigenschaft und/oder einem Sensor (76) zur Erfassung eines Ergebnisses eines in der Erntemaschine (10) ablaufenden Erntegutbearbeitungsprozesses verbunden und betreibbar ist, basierend auf den Daten und den Signalen des Sensors (72, 74, 76) Überwachungssignale hinsichtlich des Betriebszustands der Erntemaschine (10) und/oder Steuersignale zur Einstellung eines Betriebsparameters der Erntemaschine (10) zu erzeugen.

3. Erntemaschine (10) nach Anspruch 1 oder 2, wobei das Identifikationselement (86) ein Etikett mit einer optisch identifizierbaren Kennzeichnung, wie ein Strichcode oder QR-Code, ist und die Leseeinrichtung (68) optisch arbeitet.

4. Erntemaschine (10) nach Anspruch 3, wobei die Leseeinrichtung (68) handhaltbar ist.

5. Erntemaschine (10) nach einem der Ansprüche 1 bis 4, wobei das Identifikationselement (86', 86") ein elektromagnetisch auslesbarer Datenträger, wie ein RFID-Chip, ist und die Leseeinrichtung (68) elektromagnetisch arbeitet.

6. Erntemaschine (10) nach Anspruch 5, wobei die Leseeinrichtung (68) im Bereich einer Öffnung einer Außenhülle (88) der Erntemaschine (10) befestigt ist, durch die das Erntegutbearbeitungselement aus der Erntemaschine (10) ausbau- und einbaubar ist.

7. Erntemaschine (10) nach Anspruch 6, wobei die Leseeinrichtung (68) innerhalb einer Außenhülle (88) der Erntemaschine befestigt ist.

8. Erntemaschine (10) nach einem der Ansprüche 1 bis 7, wobei die Leseeinrichtung (68) eingerichtet ist, zu erkennen, wenn ein Erntegutbearbeitungselement zur Erntemaschine (10) gebracht oder davon entfernt wird.

9. Erntemaschine (10) nach einem der vorhergehenden Ansprüche, wobei durch die Steuereinrichtung die Art eines Dreschkorbs (34), Separierkorbs (36), Reinigungssiebs (78, 80), Strohhäckslers oder Strohverteilers für einen Mähdrescher identifizierbar ist.

## Claims

1. Agricultural harvesting machine (10), comprising:
at least one crop processing element, which is mounted in the interior of the harvesting machine (10), is interchangeable and available in different variants, and
an electronic control unit (62), which is connected to a database (66), in which data relating to the crop processing element incorporated in the interior of the harvesting machine (10) is stored, the control unit (62) being configured to generate output signals based on the data relating to the crop processing element,
**characterized by** a reading device (68) which is connected to the control unit (62), is configured to interact with an identification element (86, 86', 86") attached to the crop processing element and, during or following an installation of a crop processing element in the harvesting machine (10), to transmit to the control device (62) an output signal identifying the crop processing element uniquely and representing a unique article number of the crop processing element, by using which signal the control unit (62) updates the database (66) and can then be operated so as to retrieve the data relating to the respectively installed crop processing element from the database (66),
wherein the control device (62) can be operated to request the data relating to the crop processing element from another, remote database via a wire-free communication interface (84) and to store the same in the database (66) if a specific article number is not present in the database (66).

2. Harvesting machine (10) according to Claim 1, wherein the control unit (62) is configured to monitor the operating state of the harvesting machine (10) and/or is used for the automatic adjustment of an operating parameter of the harvesting machine (10), and is connected to a sensor (72) for detecting an operating value of the harvesting machine (10) and/or a sensor (74) for detecting a crop property and/or a sensor (76) for detecting a result of a crop processing process proceeding in the harvesting machine (10), and can be operated on the basis of the data and the signals from the sensor (72, 74, 76) to generate monitoring signals with regard to the operating state of the harvesting machine (10) and/or control signals for adjusting an operating parameter of the harvesting machine (10).

3. Harvesting machine (10) according to Claim 1 or 2, wherein the identification element (86) is a label with an optically identifiable marking, such as a bar code or QR code, and the reading device (68) operates optically.

4. Harvesting machine (10) according to Claim 3, wherein the reading device (68) can be hand-held.

5. Harvesting machine (10) according to one of Claims 1 to 4, wherein the identification element (86', 86") is an electromagnetically readable data carrier, such as an RFID chip, and the reading device (68) operates electromagnetically.

6. Harvesting machine (10) according to Claim 5, wherein the reading device (68) is fixed in the region of an opening of an outer shell (88) of the harvesting machine (10), through which the crop processing element can be removed from and installed in the harvesting machine (10).

7. Harvesting machine (10) according to Claim 6, wherein the reading device (68) is fixed within an outer shell (88) of the harvesting machine.

8. Harvesting machine (10) according to one of Claims 1 to 7, wherein the reading device (68) is configured to detect when a crop processing element is brought to or moved away from the harvesting machine (10).

9. Harvesting machine (10) according to one of the preceding claims, wherein, by means of the control device, the type of a threshing concave (34), separating basket (36), cleaning screen (78, 80), straw chopper or straw distributor for a combine harvester is identifiable.

## Revendications

1. Moissonneuse agricole (10) comprenant :
au moins un élément de traitement de récolte monté à l'intérieur de la moissonneuse (10), interchangeable et disponible dans différentes variantes, et
une unité de commande électronique (62) connectée à une base de données (66) dans laquelle sont stockées des données relatives à l'élément de traitement de récolte installé à l'intérieur de la moissonneuse (10), dans laquelle l'unité de commande (62) est conçue pour générer des signaux de sortie basés sur les données relatives à l'élément de traitement de récolte,
**caractérisé par** un dispositif de lecture (68) connecté à l'unité de commande (62), qui est conçu pour coopérer avec un élément d'identification (86, 86', 86") monté sur l'élément de traitement des récolte et qui pour transmettre au dispositif de commande (62), pendant ou après l'installation d'un élément de traitement de récolte dans la machine de récolte (10), un signal de sortie qui identifie de manière unique l'élément de traitement de récolte et qui représente un numéro d'article unique de l'élément de traitement de récolte, à partir duquel l'unité de commande (62) actualise la base de données (66) et peut ensuite être utilisée pour extraire de la base de données (66) des données relatives à l'élément de traitement de récolte respectivement installé,
dans laquelle le dispositif de commande (62) peut être mis en oeuvre pour récupérer les données relatives à l'élément de traitement de récolte à partir d'une autre base de données distante par l'intermédiaire d'une interface de communication sans fil (84) et pour les stocker dans la base de données (66) si aucun numéro d'article déterminé n'est présent dans la base de données (66).

2. Moissonneuse (10) selon la revendication 1, dans laquelle l'unité de commande (62) est conçue pour surveiller l'état de fonctionnement de la moissonneuse (10) et/ou pour régler automatiquement un paramètre de fonctionnement de la moissonneuse (10), et comportant un capteur (72) destiné à détecter une valeur de fonctionnement de la moissonneuse (10) et/ou un capteur (74) destiné à détecter une propriété de la récolte, et/ou un capteur (76) destiné à détecter un résultat d'un processus de traitement de récolte se produisant dans la moissonneuse (10) et pouvant être mis en oeuvre pour générer, sur la base des données et des signaux de capteurs (72, 74, 76), des signaux de surveillance concernant l'état de fonctionnement de la moissonneuse (10) et/ou des signaux de commande permettant de régler un paramètre de fonctionnement de la moissonneuse (10).

3. Moissonneuse (10) selon la revendication 1 ou 2, dans laquelle l'élément d'identification (86) est une étiquette qui porte un identifiant identifiable par voie optique, par exemple un code barre ou un code QR, et le dispositif de lecture (68) fonctionne par voie optique.

4. Moissonneuse (10) selon la revendication 3, dans laquelle le dispositif de lecture (68) peut être tenu à la main.

5. Moissonneuse (10) selon l'une des revendications 1 à 4, dans lequel l'élément d'identification (86', 86") est un support de données à lecture électromagnétique, par exemple une puce RFID, et le dispositif de lecture (68) fonctionne par voie électromagnétique.

6. Moissonneuse {10) selon la revendication 5, dans laquelle le dispositif de lecture {68) est fixé dans la zone d'une ouverture ménagée dans une paroi extérieure (88) de la moissonneuse (10), à travers laquelle l'élément de traitement du récolte peut être retiré de la moissonneuse (10) et y être installé.

7. Moissonneuse (10) selon la revendication 6, dans laquelle le dispositif de lecture (68) est monté dans une paroi extérieure (88) de la moissonneuse.

8. Moissonneuse (10) selon l'une des revendications 1 à 7, dans laquelle le dispositif de lecture (68) est conçu pour détecter le moment où un élément de traitement de récolte est monté sur la moissonneuse (10) ou retiré de celle-ci.

9. Moissonneuse (10) selon l'une des revendications précédentes, **caractérisée en ce que** le type d'un contre-batteur (34), d'un contre-batteur séparateur (36), d'un tamis de nettoyage (78, 80), d'un broyeur de paille ou d'un distributeur de paille destiné à une moissonneuse-batteuse peut être identifié par le dispositif de commande.
